**Europäisches Patentamt**

(19) **European Patent Office**

**Office européen des brevets**

(11) Publication number : **0 385 660 B1**

(12) # EUROPEAN PATENT SPECIFICATION

(45) Date of publication of patent specification :
16.12.92 Bulletin 92/51

(51) Int. Cl.⁵ : **C03B 7/10**

(21) Application number : **90301921.4**

(22) Date of filing : **22.02.90**

(54) **Straight line shear mechanism.**

(30) Priority : **27.02.89 US 315955**

(43) Date of publication of application :
**05.09.90 Bulletin 90/36**

(45) Publication of the grant of the patent :
**16.12.92 Bulletin 92/51**

(84) Designated Contracting States :
**DE FR GB IT**

(56) References cited :
**GB-A- 2 174 694**
**US-A- 4 699 643**
**US-A- 4 781 746**

(73) Proprietor : **Emhart Glass Machinery Investments Inc.**
**c/o RL&F Service Corp. One Rodney Square, 10th Floor 10th and King Streets**
**Wilmington, Delaware 19801 (US)**

(72) Inventor : **Wright, Douglas W.**
**5 Center Street**
**Tarriffville, Connecticut 06081 (US)**
Inventor : **Menard, Alan W.**
**34, Stonehedge Lane**
**Bolton, Connecticut 06043 (US)**

(74) Representative : **Wetters, Basil David Peter et al**
**Emhart Patents Department Lyn House 39 The Parade**
**Oadby, Leicester LE2 5BB (GB)**

EP 0 385 660 B1

Jouve, 18, rue Saint-Denis, 75001 PARIS

## Description

The present invention relates to a straight line shear mechanism for cutting gobs from continuously fed runners of molten glass which gobs are to be formed into glass containers.

A straight line shear mechanism is disclosed in U.S. No. 4,699,643 and comprises a pair of opposed shears mounted on brackets for sliding movement towards and away from each other, means for moving the shears comprising a pneumatic cylinder having an operating rod extending outwardly from opposite ends of the cylinder, a rack and pinion assembly having at least one rack element, one end of the operating rod being connected to the rack element and the other to a bracket.

The molten glass of the runners on which the shear mechanism operates distributes a tremendous amount of heat, which tends to cause distortion and misalignment of various components of the mechanism. In particular the operating rod tends to become distorted owing to misalignment of other components, and such distortion causes excessive wear which results in premature failure of the pneumatic cylinder thus to cause stoppage of the whole machine supplied with glass from the shear mechanism.

It is one of the objects of the present invention to increase the operating life of such a shear mechanism.

The present invention provides a straight line shear mechanism for cutting discrete gobs from a runner of molten glass which are to be formed into glass containers

comprising a pair of opposed shears mounted on brackets for sliding movement towards and away from each other

means for moving the shears comprising a pneumatic cylinder having an operating rod extending outwardly from opposite ends of the cylinder

a rack and pinion assembly having at least one rack element

one end of the rod being connected to the rack element and the other to a bracket

characterized in that

the connection between the ends of the rod and the rack element and the bracket are made by couplings each coupling comprising

a head member fixed to the rod and a socket member fixed to each of the rack element and the bracket, the head member comprising a cylindrical head on a neck,

the socket member comprising an axial slot extending from an end face of the socket member and adapted to receive the neck of the head member, and opening into a transverse slot adapted to receive the cylindrical head the dimensions of the coupling parts being so that the rod can rotate about its axis and slight misalignments between the rod the bracket and the rack element can be accommodated without distortion of the rod.

There now follows, with reference to the accompanying drawings, a description of a preferred embodiment of a shear mechanism chosen to illustrate the invention by way of example.

In the accompanying drawings

Figure 1 is a diagrammatic plan view of a straight line shear mechanism.

Figure 2 is an oblique view, with the parts separated, of a coupling between a rod of a pneumatic cylinder of the shear mechanism and a rack element, the teeth of the rack being shown upwardly facing rather than downwardly facing for the purposes of illustration.

Figure 3 is a view of part of the straight line shear mechanism, partly in section, taken at line 3-3 of Figure 1.

The straight line shear mechanism 10 is arranged to cut discrete gobs of glass (not shown) from gravity fed runners of molten glass (not shown) which gobs are to be formed into glass containers. The mechanism comprises pairs of opposed shears 11 which are mounted for cutting movement towards and away from each other. Each pair of shears 11 is secured to an L shaped slide 12 which is displaceable along parallel guide rails 14. The L shaped slides 12 have cylindrical portions 16 with integral brackets 18. The shears are moved by means comprising a pneumatic cylinder 24 having an operating rod 23 extending outwardly from both ends of the cylinder 24.

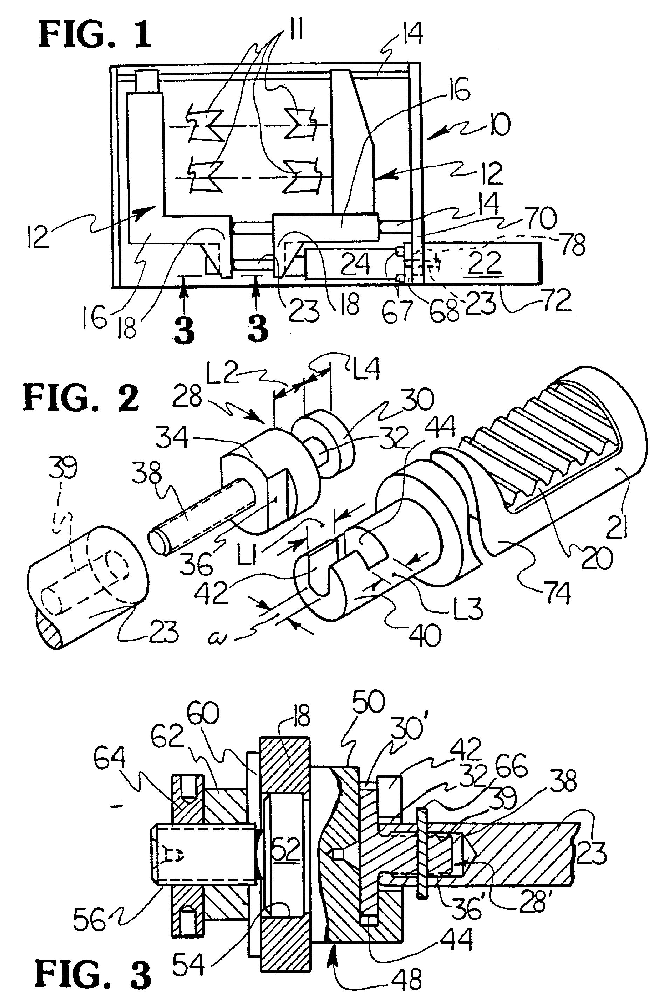

A rack element 20 (Figure 2) of a rack and pinion assembly 22 is connected to one end of the rod 23 of the pneumatic cylinder 24 whose other end is connected to the left hand bracket 18, and an other rack element 20, which extends below the pneumatic cylinder 24, is directly connected to the other bracket 18. Each rack element is supported by a cylindrical housing 21. When the pneumatic cylinder 24 is operated, the shear pairs 11 will be conjointly displaced towards or away from each other.

Connections between the ends of the rod 23 and the rack element 20 and the bracket 18 are made by couplings 28 (Figure 2) and 48 (Figure 3).

The coupling 28 connects the rod 23 to the upper rack element 20 and is illustrated in Figure 2. It includes a cylindrical head member 30, a reduced diameter neck 32, a third cylindrical portion 34 approximately the same diameter as the head portion 30 and having flats 36 defined there to receive an installation tool, and an elongated threaded portion 38, which is threaded into a threaded bore 39 in one end of the rod 23 and by which the head member 30 is fixed to the rod 23.

A cylindrical socket member 40 of a rack 20 has a vertical, upwardly opening axial slot 42 extending from an end face of the member 40. The width W of this slot is slightly larger than the diameter of the neck 32 to permit its placement in this slot. The slot 40 opens into a second vertical, upwardly opening slot 44 defined in the rack element transversely behind the first slot 42. This slot 44 defines the axial length L1 of the front slot 42 (slightly smaller than the axial length L2 of the neck 32). The axial length L3 of the second slot 44 is also selected to be slightly larger than the axial width L4 of the head member 30 of the coupling 28. The desired orientation of these slots is maintained by the rack and pinion mechanism 22.

A coupling 48, which connects the other end of the rod 23 to the bracket 18, is shown in Figure 3. A similar coupling 48 may connect a rack 20 to the other bracket 18. This coupling comprises a socket member 50 having the same first axial slot 42 and second transverse slot 44 defined therein, a bushing 52 which is received by a bracket opening 54 and a threaded end portion 56. The socket members 50 is secured to the bracket 18 by a thrust washer 60, a split nut 62 and a threaded collar 64. The coupling 48 connects the rod 23 to the bracket 18 and also comprises a head member 28′ comprising a cylindrical head member 30′ and a reduced diameter threaded portion 36′ which is threadedly inserted into a threaded bore 39 in the rod 23. A roll pin 66 can be used to secure the head member 28′ to the rod 23.

In the coupling 48, the rod 23 provides a neck 32 which is received in the axial slot 42 while the head 30′ is received in the transverse slot 44.

The rack and pinion gear box 22 is secured in position by six screws. Four of these screws 67 pass through a pneumatic cylinder mounting flange 68 and a side frame 70 into a gear box housing 72, and two additional screws (not shown) extend through the side frame 70 into the gear box housing 72. To disconnect the pneumatic cylinder 24, these six screws are removed so that the gear box housing 72 can be removed. The cylindrical rack housing 21 can then be retracted exposing the coupled end 40 of the rack 20. The right end of the pneumatic cylinder rod 23 can then be lifted separating the coupling 28 from the rack 20 (a hole 78 in the frame through which the rod 23 passes is sufficiently large to permit such movement). The left end of the rod 23 is then lifted to complete removal of the pneumatic cylinder 24.

The couplings permit rotation of the rod 23 about its axis and automatically accommodate a small amount of misalignment from the bracket 18 to the rack 20, thereby minimizing rod distortion, and hence, rod wear.

## Claims

1. A straight line shear mechanism for cutting discrete gobs from a runner of molten glass which are to be formed into glass containers,

    comprising a pair of opposed shears (11) mounted on brackets (18) for sliding movement towards and away from each other

    means for moving the shears comprising a pneumatic cylinder (24) having an operating rod (23) extending outwardly from opposite ends of the cylinder

    a rack and pinion assembly (22) having at least one rack element (20).

    one end of the rod (23) being connected to the rack element (20) and the other to a bracket (18)

    characterized in that

    the connection between the ends of the rod (23) and the rack element (20) and the bracket (18) are made by couplings (28, 48,) each coupling comprising

    a head member (30, 28′,) fixed to the rod (23) and a socket member (40, 50,) fixed to each of the rack element (20) and the bracket (18), the head member comprising a cylindrical head (30, 30′) on a neck (32),

    the socket member comprising an axial slot (42) extending from an end face of the socket member and adapted to receive the neck (32) of the head member, and opening into a transverse slot (44) adapted to receive the cylindrical head 30,30′, the dimensions of the coupling parts being so that the rod (23) can rotate about its axis and slight misalignments between the rod (23,) the bracket (18) and the rack element (20) can be accommodated without distortion of the rod (23).

2. A mechanism according to claim 1, wherein the axial slots (42) and the transverse slots (44) are slightly larger than the necks (32) and the heads (30,30′) received in them.

3. A mechanism according to one of claims 1 and 2, wherein the head member is removably fixed in the rod (23) by a threaded portion (28,28′)

4. A mechanism according to claim 3, wherein the threaded portion (28′) is locked in the rod (23) by a transverse pin (66).

5. A mechanism according to claim 3, wherein the head member comprises a portion of increased diameter (34) adjacent the neck (32).

## Patentansprüche

1. Geradlinig arbeitender Abschermechanismus zum Schneiden von diskreten Tropfen von einem Block geschmolzenen Glases, die zu Glasbehältern geformt werden sollen,

    mit einem Paar gegenüberliegender Scheren (11), die an Trägern (18) zwecks Gleitbewegung aufeinander zu und voneinander weg montiert sind,

einer Einrichtung zur Bewegung der Scheren mit einem pneumatischen Zylinder (24), der eine Betätigungstange (23) aufweist, welche sich von gegenüberliegenden Enden des Zylinders nach außen erstreckt,

einer Zahnstangen- und Ritzelanordnung (22) mit mindestens einem Zahnstangenelement (20),

wobei ein Ende der Betätigungsstange (23) mit dem Zahnstangenelement (20) und das anderen mit einem Träger (18) verbunden sind,

dadurch **gekennzeichnet,** daß

die Verbindungen zwischen den Enden der Betätigungsstange (23) und dem Zahnstangenelement (20) und dem Träger (18) durch Kupplungen (28, 48) hergestellt sind, wobei jede Kupplung

ein Kopfglied (30, 28'), das an der Betätigungsstange (23) befestigt ist und ein Sockelglied (40, 50) umfaßt, welches an dem zahnstangenelement (20) und dem Träger (18) befestigt sind, wobei das Kopfglied einen zylindrischen Kopf (30, 30') auf einem Hals (32) aufweist,

daß das Sockelglied einen axialen Schlitz (42) aufweist, der sich von einer Endfläche des Sockelglieds erstreckt und den Hals (32) des Kopfgliedes aufnehmen kann und sich in einen transversalen Schlitz (44) öffnet, welcher den zylindrischen Kopf (30, 30') aufnehmen kann, wobei die Dimensionen der Kupplungsteile derart sind, daß die Betätigungsstange (23) sich um ihre Achse drehen kann und geringe Fehlausrichtungen zwischen der Betätigungsstange (23), dem Träger (18) und dem Zahnstangenelement (20) ohne Verformung der Betätigungsstange (23) aufgenommen werden können.

2. Abschermechanismus gemäß Anspruch 1, dadurch gekennzeichnet, daß die axialen Schlitze (42) und die transversalen Schlitze (44) etwas größer als die Hälse (32) und die Köpfe (30, 30') sind, die in ihnen aufgenommen werden.

3. Abschermechanismus gemäß einem der Ansprüche 1 und 2, dadurch gekennzeichnet, daß das Kopfglied in der Betätigungsstange (23) mit Hilfe eines Gewindeabschnittes (28, 28') entfernbar befestigt ist.

4. Abschermechanismus gemäß Anspruch 3, dadurch gekennzeichnet, daß der Gewindeabschnitt (28') in der Betätigungsstange (23) durch einen transversalen Stift (66) verriegelt ist.

5. Abschermechanismus gemäß Anspruch 3, dadurch gekennzeichnet, daß das Kopfglied einen Abschnitt mit vergrößertem Durchmesser (34) neben dem Hals (32) aufweist.

**Revendications**

1. Mécanisme de cisaille rectiligne destiné à découper dans des courants de verre fondu des paraisons qui sont destinées à être transformées en récipients en verre,

comprenant une paire de cisailles opposées (11) montées sur des ferrures (18) pour se rapprocher et s'éloigner l'une de l'autre par un mouvement de glissement,

des moyens servant à déplacer les cisailles qui comprennent un cylindre pneumatique (24) ayant une tige d'actionnement (23) qui émerge aux extrémités opposées du cylindre,

un ensemble à crémaillère et pignon (22) qui comprend au moins un élément à crémaillère (20),

une extrémité de la tige (23) étant reliée à l'élément à crémaillère (20), et l'autre à une ferrure (18)

caractérisé en ce que

les liaisons liant les extrémités de la tige (23)à l'élément à crémaillère (20) et à la ferrure (18)sont réalisées par des accouplements (28, 48), chaque accouplement comprenant:

un élément de tête (30, 28') fixé à la tige (23) et un élément à emboîtement (40, 50) fixé à l'élément à crémaillère (20) ou à la ferrure (18), l'élément de tête comportant une tête cylindrique (30, 30') sur un col (32),

l'élément à emboîtement comportant une rainure axiale (42) qui prend naissance à une face d'extrémité de l'élément à emboîtement et est adaptée pour recevoir le col (32) de l'élément de tête, et s'ouvrant dans une rainure transversale (44) adaptée pour recevoir la tête cylindrique (30, 30'), les dimensions des éléments d'accouplement étant telles que la tige (23) puisse tourner autour de son axe, et que de petits défauts d'alignement entre la tige (23), la ferrure (18) et l'élément à crémaillère (30) puissent être absorbés sans déformation de la tige (23).

2. Mécanisme selon la revendication 1, dans laquel les rainures axiales (42) et les rainures transversales (44) sont un peu plus grandes que les cols (32) et les têtes (30, 30') qui s'y logent.

3. Mécanisme selon une des revendications 1 et 2, dans lequel l'élément de tête est fixé dans la tige (23) de façon amovible par une partie filetée (28, 28').

4. Mécanisme selon la revendication 3, dans lequel la partie filetée (28') est bloquée dans la tige (23) par une goupille transversale (66).

5. Mécanisme selon la revendication 3, dans lequel l'élément de tête comprend une partie de diamètre agrandi (34) adjacente au col (32).

# FIG. 1

# FIG. 2

# FIG. 3